# EUROPEAN PATENT SPECIFICATION

(11) **EP 2 546 689 B1**
(45) Date of publication and mention of the grant of the patent: **15.03.2017**
(21) Application number: 12175548.2
(22) Date of filing: 09.07.2012
(51) Int. Cl.: G02B 6/44, H04B 10/00

(54) **Optical transceiver for a broadband network**
Optische Sende- und Empfangseinrichtung für ein Breitbandnetzwerk
Emetteur/récepteur optique pour un réseau à large bande passante

(30) Priority: 11.07.2011 NL 2007077
(43) Date of publication of application: 16.01.2013
(73) Proprietor: Genexis Holding B.V., 5652 AC Eindhoven (NL)
(72) Inventor: De Laat, Maurice Martinus, 6021 ZS Budel (NL); Egmond, Maarten, 5653 PX Eindhoven (NL); Van Den Hoven, Gerard Nicolaas, 6105 BP Maria Hoop (NL)
(74) Representative: DeltaPatents B.V.

(56) References cited:
- EP-A1- 1 626 300
- EP-A1- 1 835 319
- EP-A1- 2 105 770
- WO-A2-2005/045487
- DE-A1- 19 832 398
- DE-A1-102008 025 095
- US-B1- 6 522 825

## Description

### BACKGROUND OF THE INVENTION

The invention is related to a device for use at the location of a customer of a broadband network system, which device has been provided with one or more user ports for connecting appliances of the customer to optic fibres and in which signals received from an incoming optic fibre are with the help of a transmitter-receiver - also called transceiver - converted into electric signals that, after additional processing to make them suitable for the appliances, are supplied to the user ports as input for the appliances concerned. The invention is also related to a broadband network system - also called an optical communication system - provided with such a device and to a method to form such a device.

Such a device forms a terminal of a light-conducting fibre broadband network that is extremely suitable for transferring large amounts of information at a high speed. Initially, optical fibres were mainly used for transport between plants and distribution stations from which the electrical signals obtained by conversion were transported to users in a house or office. In order to be able to make optimum use of the capacity of a light-conducting fibre broadband network, the fibre must run on into such a house or office and a device of the kind mentioned in the introduction must be installed there, through which one or more services can be offered. Then, in this device the electric signals obtained after conversion are led to individual appliances. Such a device is also referred to as a fibre-to-the-home station or FttH (Fibre to the Home) terminal. The services mentioned can, for instance, be a telephone, television and/or radio connection or involve data exchange such as a connection with the Internet.
A disadvantage of the known device is that its use is relatively expensive. This is related to the fact that different layers/functions in the device can be distinguished in a known device. These are successively the levels of the passive infrastructure (Level 0), the network layer (Level 1) and the service layer (Level 2). In the various solutions for customer appliances available at this moment, Level 1 and Level 2 are often combined in a so-called all-in-one module. This despite the fact that the electronics required for the service layer usually have the shortest life span and therefore need replacement after some years.
Also because of this approach there is a lot of discussion going on about who has to pay the customers' equipment: the network manager or the service provider. This means that a consumer who wants to extend its service (package) will have to bring into use a second, third, etc. user module. It is beneficial for the purchasing price of the device when such a user module is not present in the device already from the start. In the given situation, the consumer/user asking his provider for an additional service will be visited by an engineer who will install the module concerned in the device present at the consumer/user. This has various disadvantages, such as the relatively high price of the installation of the additional module.
Patent publication EP1835319 A1 discloses a network termination apparatus which comprises a first module and a second module. The first module is coupled to an optical network fiber and comprises a transceiver for converting the optical signal to electrical signals. The second module comprises customer premises equipment. The second module and the first module are coupled to each other by means of a cable for transmitting electrical signals, relating to the communication signals being transmitted via the optical fiber, between the two modules.
Patent publication DE19832398 A1 discloses a connection system for building equipment installation which allows a range of different signals to be transmitted using a wall mounted bus system that connects with user equipment.

### SUMMARY OF THE INVENTION

An objective of the present invention is therefore to provide a similar device that is relatively cheap and that does not incur any or at least fewer of the above-mentioned problems.

In view of this, a device for use at the location of a customer of a broadband network system according to the preamble of claim 1 is provided characterized in that the second module has been detachably attached to the first module by means of co-operating attachment means present on the modules, in which two opposite sides of the modules have been provided with mutually corresponding connector parts forming together a connection by means of which the signals coming from the transceiver are during use led from the first module to the second module.
First of all, the invention is based on the insight that it may be beneficial to dispose a distribution structure or network termination unit (NTU) to be used as much as possible of unnecessary parts. The minimum requirement for network equipment at the end customer is an optical transceiver and according to the invention this has been placed in a first module. A transceiver is a combination of optical transmitter and optical receiver, if necessary provided with power supply. The transceiver converts the received optical data into usable electrical signals. These electrical signals are then made available, for example by using an electrical connector, for connecting one or more service modules (RGU = Residential Gateway Unit) that coincide with a second module. Technically speaking, we can no longer call this a network termination module. Therefore, the first module can also be referred to as a TU (= Transceiver Unit), as will sometimes happen below. This implies that the TU terminates the network. In a device according to the invention the demarcation point between the broadband network and the in-home network of the end customer is no longer on the glass fibre connector that is part of the passive infrastructure (which presently often makes a connection with an all-in-one module), but, for instance, on an electrical connector of the TU. Therefore, the optical component is part of the broadband network. This means that the TU is/need no longer be the responsibility of the service provider, but is/can be the responsibility of the network manager who is a suitable party for bearing the responsibility for this part of the network. As seen from the network, it is not unusual that the TU is part of the broadband network. In fact, there are various network topologies/technologies for implementing a broadband network based on glass fibre that are not or not fully compatible and/or exchangeable, such as PtP (=Point-to-point), TDM-PON (=Time Division Multiplexed Passive Optical Network) and WDM-PON (=Wavelength Division Multiplexed Passive Optical Network).
In a PtP network every end customer has been connected to the plant through a separate glass fibre. By default, so-called Ethernet frames can be sent through this optical connection. The point-to-point network architecture has, among others, been standardised in IEEE 802.3 (Clause 58 and Clause 59). In TDM-PON several end customers share a glass fibre following the principle of distribution using time locks. This means that both the glass fibre connection and the available bandwidth are shared. Examples of TDM-PON are GPON (Gigabit PON), EPON (Ethernet PON) and XG-PON (10 Gigabit PON). These technologies are in principle not mutually exchangeable. In WDM-PON several end customers share a glass fibre following the principle of distribution of wavelengths of light. This means that the glass fibre connection is shared, but that every end customer has its own wavelength or a pair of wavelengths available for communication. The bandwidth is not shared. Now a device according to the invention is extremely suitable for application in broadband network systems based on the above-mentioned topologies/technologies. In practice, important cost benefits can be achieved because fewer different modules are to be produced and kept in stock. Also the setup of the device at a customer's location is much easier, which leads to savings in labour cost. In order to be able to make use of these different topologies/technologies, different types of transceivers and, if necessary, a coding/decoding chip (e.g. in TDM-PON) are required; all other electronics remain unchanged. The network manager can install a TU corresponding with the type of access network. All this will be explained in more detail below, among other things when discussing various examples of embodiments.
In a preferred embodiment of a device according to the invention the first module comprises an optical converter that converts the electrical signals coming from the transceiver into optical signals that then are optically transferred between de modules to a present further converter that converts the optical signals into electrical signals again and in which the mutually corresponding connector parts form an optical connector. Such an optical connector can be relatively insensitive to the modules being not fully aligned when (detachably) attaching them to each other. This is particularly advantageous when the module is to be detached (repeatedly), for example for a replacement. As the modules are in practice often made from plastic, alignment faults can easily occur as a result of tolerances in the production or torsion caused by mounting not perfectly fitting modules. In another favourable embodiment the mutually corresponding connector parts form an electrical connection in which preferably a pair of the connector parts is suitable for transferring power between the modules. As an electrical connection is relatively cheap, this embodiment also offers a plus-point with respect to the costs. Also when an optical coupling has been used between both modules, it can be beneficial to provide a separate/additional connector provision for power transfer. Power transfer can also take place in various ways, for example by making use of electromagnetic radiation such as by means of induction. In the device according to the invention the first module can beneficially comprise means for converting the electrical signals following protocols or standards. It can also be beneficial when a switching provision has been provided for tapping electrical signals to a connector provision, in which the switching provision is preferably controlled by a processor. The advantage of this variant is that an external service module can be connected in a traditional way without making use of the connector made available.
In another important preferred embodiment, the first module comprises a submodule that forms a glass fibre termination module (FTU = Fibre Termination Unit) and the remaining part of the first module has been detachably attached to the submodule by means of further attachment means placed on the submodule and the remaining part of the first module that have been interconnected by an optical connector. This further modular setup of the device at the location of the customer makes mounting easier and increases the flexibility.
In many cases the second module will be a service module (RGU) containing the means for carrying out the additional processing. It may, however, be beneficial to provide a second module containing a distribution structure (NTU) or a media converter (MC = Media Converter). Although in principle there can be more than one service module (RGU) - placed in further modules - a preferred embodiment is an embodiment in which the device does not comprise more than one second module that contains not more than one RGU.
In an important modification of a device according to the invention the attachment means form a detachable snap connection. Such attachment means can be easily (repeatedly) mounted/dismounted and easily be implemented in plastic, a preferred material for manufacturing the housings of the various modules.
Preferably, a part of the attachment means is also a part of the connector parts for conducting through the signals coming from the transceiver from the first to the second module. Such a combination facilitates easy, cheap and relatively reliable mounting of the modules onto each other, especially when the conducting through mentioned takes place via an electrical connector.
The attachment means may beneficially comprise a lockable fastening and the second module can have been provided with a control on the outside for locking or releasing the lockable fastening, in which the device is preferably provided with means for detecting the release of the lockable fastening and with controls that interrupt or recover a signal offered on a signal carrier after having detected the release or locking. This is a particularly advantageous embodiment if the signal is electrically transferred between the modules. Various variants can be used for detection means, such as making shorter one of the pins of the power connector. The power will then be interrupted first when dismounting and connected last when mounting. Signals linked to this can then interrupt or recover the signal offered on a signal carrier.
Feedback information coming from the second module can during use beneficially be led to the visualisation means placed on a visible side of the first module.
The invention further comprises a broadband network system making use of a device according to the invention. The broadband network system preferably forms a so-called optical communication system.
A method to form a device to be used at the location of a customer of a broadband network system provided with one or more user ports for connecting appliances of the customer to optical fibres and in which signals received from an incoming optical fibre are converted using a transceiver into electrical signals that, after additional processing to make them suitable for the appliances, are offered to the user ports for supply to the appliances concerned, is according to the invention characterized in that the device is made with at least a first module comprising the transceiver that on one side has been connected to the incoming optical fibre and with a second module that on a user-accessible outside has been provided with the user ports, wherein means for carrying out the additional processing are made and that is detachably attached to the first module using co-operating attachment means in which two opposite sides of the modules are provided with mutually corresponding connector parts forming a connection by means of which the signals coming from the transceiver are during use led from the first module to the second module.

### SHORT DESCRIPTION OF THE DRAWINGS

This and other aspects of the invention will become clear from and be explained using the embodiments described below as examples. Here the drawings are referred to. The following figures show:
Figure 1, in a schematic cross-section, a first embodiment of a device according to the invention;
Figure 2, in a schematic cross-section, a modification of the device of figure 1;
Figure 3, in a schematic cross-section, a further modification of the device of figure 1;
Figure 4, in a schematic cross-section, another modification of the device offigure 1;
Figure 5, in a schematic cross-section, an optical connector that may have been used in the device of figure 1;
Figures 6-9 show, in three-dimensional diagrams, the device of figure 1 in successive mounting phases;
Figure 10 shows, in a perspective view diagram, the device of figure 1 in the mounting phase corresponding with figure 9;
Figure 11 shows, in a side view diagram, the device of figure 1 in the mounting phase corresponding with figure 9.

The drawings are schematic and a cross-section may have moved.

Corresponding parts have been given the same reference numbers as much as possible.

### DETAILED DESCRIPTION OF THE PREFERRED EMBODIMENTS

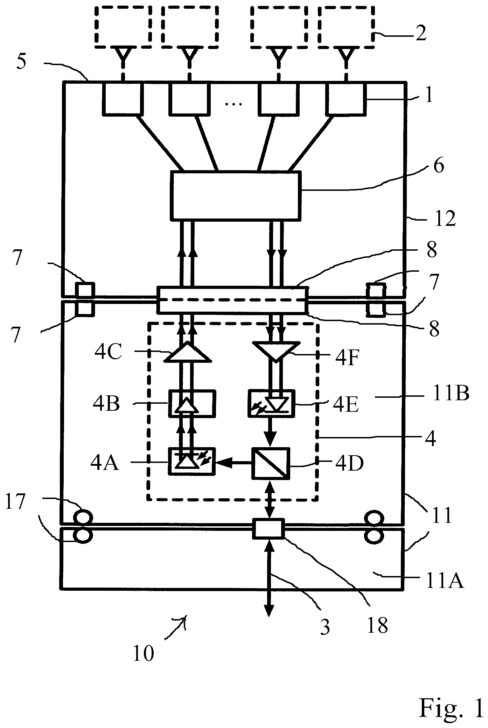

Figure 1 shows, in a schematic cross-section, a first embodiment of a device 10 for use at the location of a customer of a broadband network system. The device 10 comprises - in layers and viewed from an incoming fibre 3 - successively a first module 11 and a second module 12. The device 10 has been provided with one or more user ports 1 for connecting appliances 2 of the customer to optical fibres 3, which user ports 1 are placed on a user-accessible side of the second module 12. Before this, there is a first module 11 in which signals received from an incoming optical fibre 3 are converted into electrical signals using a transceiver 4. This transceiver 4 here has on one side an optical receiver 4A, a pre-amplifier 4B and on the other side a wavelength separator 4D, an optical transmitter 4E and a driver 4F. The second module 12 further contains means 6 for additional processing of the electrical signals in order to make them suitable for supply to the appliances 2 via the user ports 1. The means 6 preferably comprise - not separately indicated in the drawing - parts such as a microprocessor, a switch chip or - as in this example - a combination of both. The means 6 are used for processing the data signals making them suitable for connecting appliances 2 of the customer. The processes typically carried out are, for example, separating and combining data. Another typical process is determining the priority for transmitting (or receiving) data. The first module 11 has been detachably attached to the second module 12 using co-operating attachment means 7 placed on modules 11,12. Here also two opposite sides of modules 11,12 have been provided with mutually corresponding connector parts 8 forming together a connection by means of which the signals coming from the transceiver 4 are during use led from the first module 11 to the second module 12.
In this example the first module 11 contains a submodule 11A that forms an optical termination module and the remaining part 11B of the first module has been detachably attached to the submodule 11A using further attachment means 17 placed on the submodule 11A and the remaining part 11B of the first module 11. The parts 11A,11B of the first module 11 have been interconnected by means of a further optical connector 18, making sure that the optical signals can reach the transceiver 4.

Below a further explanation will be given of the most important aspects of the present invention of which figure 1 shows an important embodiment.

In a typical broadband network based on glass fibre (e.g. Fibre-to-the-Home, FttH) end customers/users want to be able to purchase (broadband) services from a service provider of their choice. In order to facilitate this, various levels or roles can be distinguished in the access network. The lowest level, Level 0, contains the passive infrastructure, being all cables and physical connections required for connecting end customers. Level 1 provides data transport via this passive infrastructure using, for instance, the Ethernet protocol (Ref: IEEE standard 802.3). The transport mechanism eventually makes sure that the service provider(s) can provide one or more services to the end customer at Level 2. A service contains (usable) information for the end customer (e.g. television, telephone, Internet, ...).
Level 0 comprises the passive infrastructure and therefore among other things the glass fibre cables and possibly equipment (splitters, filters, (de)multiplexers, ...) that are laid in the ground and that provide the physical connection from the plant (CO = Central Office) to the end customer. Further the passive infrastructure also includes the finished glass fibre(s) at the end customer in a so-called glass fibre termination module (FTU), here submodule 11A of the first module 11. The passive infrastructure is the responsibility of e.g. a party A.
Level 1 is the network layer. In the network layer the passive infrastructure is activated. This means that an optical connection between the plant and the end customer is set up for transmitting and receiving data via the passive infrastructure, making use of e.g. the Ethernet protocol. This requires active (electronic) equipment both in the plant (e.g. access switches) and at the end customer. The equipment at the end customer required for the network layer is called the network termination unit (NTU). The network providing the end customers with a (broadband) connection is called the broadband network. The network layer is managed by the network manager, party B. For this party B hires the passive infrastructure from party A.
Level 2 is the service layer. One or more services can be offered by one or more service providers via the optical connection between the plant and the end customer. For conversion of the data into usable services for the end customer specific equipment at the end customer is required. The equipment at the end customer required for the service layer is called a service module (Residential Gateway, RGU), in this example the second module 12. The services are offered by one or more service providers, party C, etcetera. For this party C hires bandwidth of the optical connection from party B.
Because of the different embodiments of the TU at Level 1, the choice for the access network technology by the network manager does not have any influence on the choice of the end customer nor on the choice of service provider for the RGU type, being the second module, that he may install. The end customer will choose an RGU based on the functionality he requires in his own home network. Examples of RGU functionality are routing, wireless (WiFi), USB, telephone (Voice-over-IP, VoIP), MoCA (Multimedia over Coax (*Alliance*))*,* remote care, E-metering, ...etc.
The total number of product versions is considerably reduced by dividing the functionality into two independent layers, i.e. the placement of the required parts in two separate modules 11,12. All this can be illustrated as follows.
Suppose, the desired network technologies are PtP, GPON and WDM-PON and the desired RG functionality is media conversion, routing, telephone (VoIP), wireless connection (WiFi) and USB. When all versions are to be made in one all-in-one module, this may require e.g. 15 different products. When using separated Level 1 and Level 2 functionality (as described in this invention) by placement in two separate modules 11,12, eight different product are required in order to be able to offer all combinations. Obviously, this reduction with (virtually) a factor two gives a considerable advantage. The advantage of dividing into Level 1 and Level 2 functionality and therefore into separate modules 11,12 of course just increases when even more product versions are defined at both Level 1 (e.g. XG-PON) and at Level 2 (e.g. MoCA, remote care, e-metering, etc.).

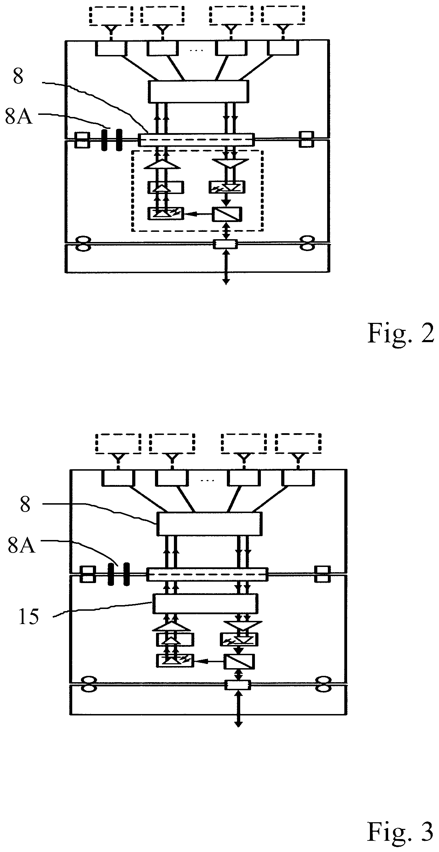

Figure 2 shows, in a schematic cross-section, a modification of the device of figure 1. In this embodiment the mutually corresponding connector parts 8 form an electrical connection, just as with the device 10 of figure 1. Here simultaneously a pair 8A of the connector parts 8 is suitable for transferring power between the modules 11,12. These connector parts 8A can of course beneficially have been placed in the same plug as the other connector parts 8. The underlying idea is the fact that the second module can be snapped onto the first module layer, making it no longer necessary to power both the first module and the second module with separate adapters. A variant can be formed by using induction (no physical connector). In case of induction an electrical voltage is activated via a conductor when the conductor is in a changing magnetic field or when a conductor moves in a magnetic field.
Figure 3 shows, in a schematic cross-section, a further modification of the device of figure 1. The first module 11A here contains means 15 for converting the electrical signals in accordance with protocols or standards. The transceiver type in the first module depends on the type of access network technology. However, some access network technologies work with different protocols, e.g. GPON. GPON is currently one of the techniques mostly used in FttH. However, in order to be able to make use of the GPON-specific data signals, these must be converted into another protocol. This requires a so-called "protocol converter" (code/decoder chip).

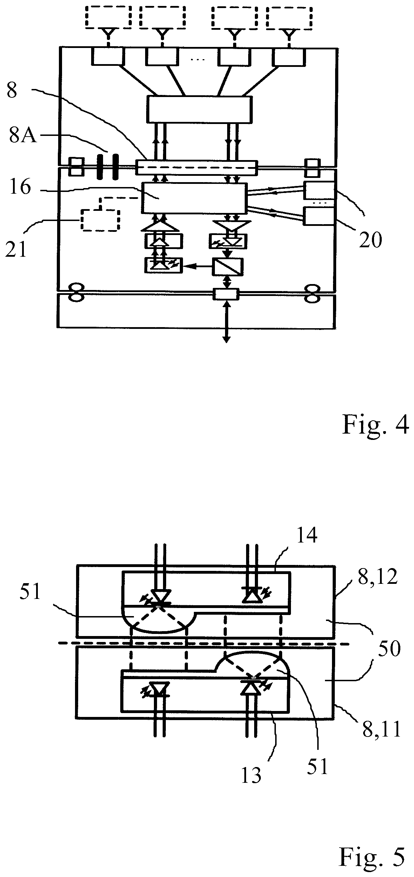

Figure 4 shows, in a schematic cross-section, another modification of the device of figure 1. In this embodiment the first module also includes a switching provision 16t for tapping electrical signals to a connector provision 20, in which the switching provision 16 is preferably controlled by a processor 21.
Figure 5 shows, in a schematic cross-section, an optical connector that may have been used in the device of figure 1. The connector parts 8 of the optical connector 50 each contain an optical transmitter and an optical receiver. The signals are as parallel radiation bundles sent from the one module 11 to the other module 12 by means of lenses 51. An important advantage of this embodiment is that such a connector is relatively insensitive to alignment faults of the modules 11,12 with respect to each other.

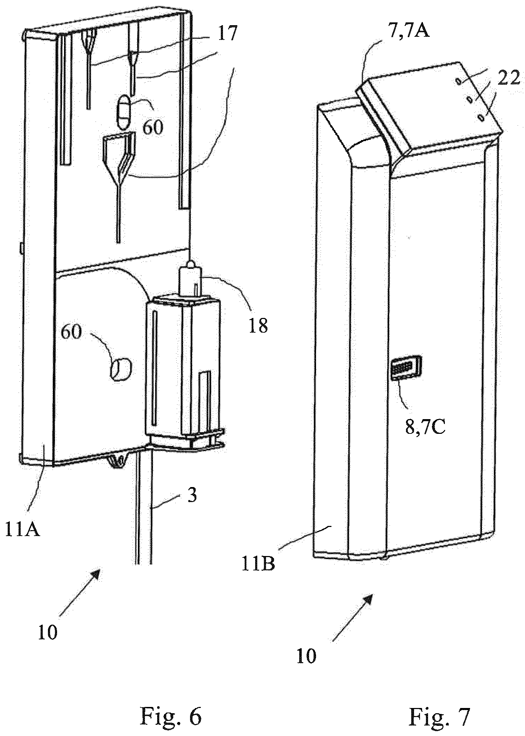

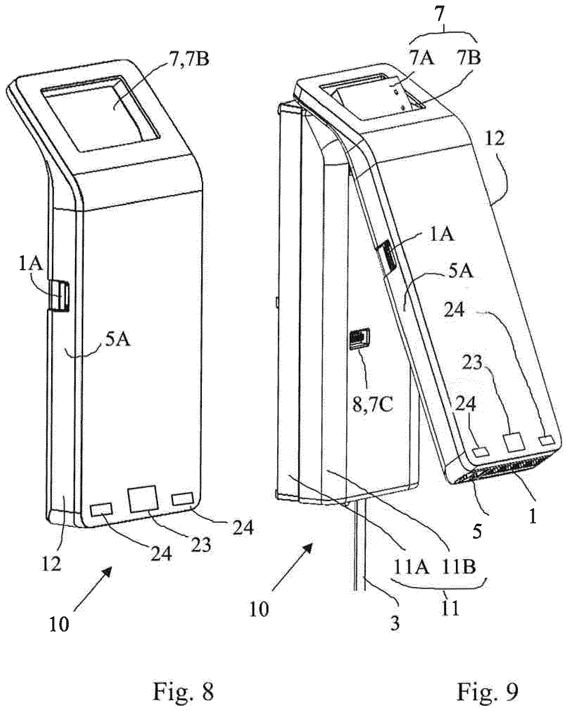

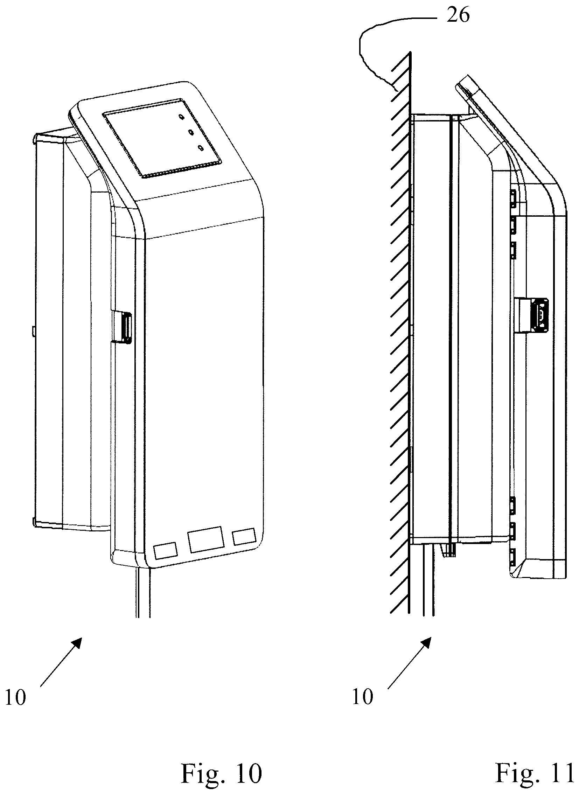

Figures 6-9 show, in three-dimensional diagrams, the device of figure 1 in successive mounting phases. Figure 10 shows, in a side view diagram, the device of figure 1 in the mounting phase corresponding with figure 9. Figure 6 shows the submodule 11A of module 11 of the device of figure 1. The submodule 11A is a box-shaped body, preferably made from plastic such as ABS (= acrylonitrile butadiene styrene) or polycarbonate, that has been attached to a wall 26 with screw holes 60 (see figure 11). The other attachment means 17 with which the submodule 11A (Level 0) has been detachably attached to the remaining part 11B (see figure 7) of the first module 11 here comprise three (dovetail-shaped) slots 17 with respect to which the remaining part 11B of the first module (Level 1) has been provided with corresponding protruding parts that are not visible in the drawing. The attachment is made by sliding the remaining part 11B of the first submodule 11 downwards over submodule 11A, by which the glass fibre connector 18 makes a connection with the transceiver in the remaining part 11B of the first module 11. As glass fibre is fragile and the glass fibre connector 18 must remain clean during the installation, layer 1 in the device according to the invention can be directly installed on layer 0 by an engineer in order to terminate the broadband network. The power (power transfer) will typically be connected from an external adapter to the first module for Level 1. The installation of modules required for Level 0 and Level 1 is usually done only once.

The connector provision 8 placed on the front side (view side) of the first module 11 has now been made available on the remaining part 11B (see figure 7) of the first module 11 (Level 1). The detachable attachment means 7 for attachment of the second module 12 (see figure 8) onto the first module 11 here comprise a detachable snap connection. This is on the one side formed by a protruding part 7A of the first module 11 that clamps into an opening 7B of the second module, which provisions are slanting with respect to the front surface of the modules 11,12. Apart 7C of the detachable snap connection is formed here by the connector parts 8 residing in the modules 11,12 and that here form an electrical plug connector of which only the part placed on the first module 11 is visible in the drawing. It can be seen that module 11 for Level 1 has a clear location for giving status feedback through a number of LEDs (= Light Emitting Diodes) 22. Alternatively, a monitor (LCD) can be positioned on the place of the LEDs. The form and location on the module for Level 1 is such, that the status feedback always remains visible to the user, even when an RGU 12 has been snapped onto it.
On the second module 12 (see figure 8) there is a button 23 with which the lock between the modules 11, 12 can be released. The two smaller buttons 24 on both sides of this are required for typical RG functionality, such as "reset" and "WPS" (= Wifi Protected Setup) for wireless connectivity of appliances. On a side 5A of the second module 12, a connector 1A is visible of the type USB (Universal Serial Bus), which forms an often used connector/user port 1 for connecting appliances 2.
Figure 9 shows how the second module 12 is detachably attached to the first module 11. In this figure also the accessible user ports 1 are visible that reside here at the bottom 5 of the second module 12. Preferred embodiments of user ports 1 are so-called RJ-45 and RJ-11 ports. In the figure, the submodule 11A and the remaining part 11B of the first module 11 have already been attached to each other at the location of the customer. This end customer subscribes to a service provider. When Level 1 is available at the end customer, this end customer can independently purchase a Level 2 module (RGU) and therefore the second module 12 in the shop or receive this through his service provider. The received module 12 will in this way fully comply with the requirements of the end customer or exactly correspond with the service bought by the end customer anyway. The second module 12 has been made for DIY installation by the end customer. This saves costs of an engineer for installing this module. The chosen embodiment leaves only one way to correctly attach the module 12: (i) Hook the hole of the second module 12 behind the window of the first module. Because of the form of both modules this is a natural hook for the end customer. (ii) Make a hinging movement with the second module 12 (the pivoting point is at the window) and thus bring the modules together. The second module 12 attaches with a snap to the first module 11 via connector parts 8 that here form a part 7C of the detachable attachment means 7. The snapping on automatically generates feedback to the customer about correct attachment (audible/perceptible snap). The final situation of snapping the second module 12 onto the first module 11 is shown in figure 10. Preferably, as in this example, the layer 2 module 12 will be powered (power transfer) by the layer 1 module 11 via the connector provision 8. As the requirements of the end customer change rather quickly (functional requirements for second module and/or other service provider), it is expected that it must be possible to change the second module more often. Placement of the transceiver in Level 1 immediately reduces the costs of the second module and makes changing over to another module in Level 2 easy. An alternative attachment of the modules 11,12 onto each other is, for example, attachment by means of magnets.
There are various possibilities for mechanically disconnecting the two modules 11,12. Preferably, as in this example, the connection can be mechanically disconnected by pulling with sufficient force into the direction opposite to the installation direction (the mechanical lock will be removed by applying force). Also, a release button 23 may have been placed on the second module 12, as is the case here. By manually pressing this button the mechanical lock is released and the module can be taken off. Apart from a purely mechanical purpose, the release button 23 can also have an electrical purpose: the second module is disabled by manually pressing the button. Disabling can also be done by shutting off the power supply of Level 1 to Level 2 by means of a make-break contact. Electrically disabling the second module 12 before it has been fully disconnected mechanically avoids damage to the electronic components (in particular the silicon chips). In fact, if module 12 has not been electrically disabled, a spark may occur on the electric connector provision between Level 1 and Level 2.

The second module 12 can also be disabled in other ways. For example, one pin in the connector provision can be shorter than the other pins. When disconnecting the second module 12, this contact will be broken first and by this the power transfer can be disabled. Another way to disable the second module 12 is by using a push button between the two modules. This push button provides conduction when the two modules have been attached onto each other and breaks this contact when the second module is removed. Seen from the side, the total stack of modules looks as shown in figure 11 in which successively a wall 26, Level 0 (submodule 11A), Level 1 (remaining part 11B of the first module) and Level 2 (second module 12) are visible.
The invention has been described above based on its preferred embodiments. Technical experts will realize that many changes and alterations can be made without exceeding the scope of the included claims. Therefore, such preferred embodiments are to be regarded as being illustrative instead of limiting and no limits may be derived from this other than those that have been explicitly expressed in the included claims.
It is thus noted that the modifications of figures 2, 3, 4 and 5 can partly or all be combined in one embodiment.

## Claims

1. Device (10) for use at the location of a customer of a broadband network system provided with one or more user ports (1) for connecting appliances (2) of the customer to optical fibres (3) and in which signals received from an incoming optical fibre (3) are converted using a transceiver (4) into electrical signals that, after additional processing to make them suitable for the appliances (2), are offered to the user ports (1) for supply to the appliances concerned (2), the device (10) comprising a first module (11) that comprises the transceiver (4) that has on one side been connected to the incoming optical fibre (3) and that comprises a second module (12) with the user ports on the user-accessible outside (5), within which means (6) for carrying out the additional processing reside, **characterized in that** the second module (12) has been detachably attached to the first mo dule (11) using a co-operating attachment means (7) present at the modules (11,12) in which two opposite sides of the modules (11,12) are provided with mutually corresponding connector parts (8) forming together a connection by means of which the signals coming from the transceiver (4) are during use led from the first module (11) to the second module (12).

2. Device (10) according to claim 1, **characterized in that** the first module includes an optical converter (13) converting the electrical signals coming from the transceiver into optical signals that then are optically transferred between de modules (11,12) to a further converter (14) converting the optical signals again into electrical signals and in which the mutually corresponding connector parts (8) form an optical connector (50).

3. Device according to claims 1 and 2, **characterized in that** the mutually corresponding connector parts (8) form an electrical connection in which preferably a pair (8A) of the connector parts (8) is suitable for transferring power between the modules (11,12).

4. Device according to claims 1, 2 or 3, **characterized in that** the first module includes means (15) for converting the electrical signals in accordance with protocols or standards.

5. Device according to one of the above-mentioned claims, **characterized in that** the first module also has a switching provision (16) for tapping electrical signals to a connector (20) in which the switching provision (16) is preferably controlled by a processor (21).

6. Device according to one of the above-mentioned claims, **characterized in that** the first module (11) has a submodule (11A) forming an optical termination module and the remaining part (11B) of the first module (11) has been detachably attached to the submodule (11A) using further attachment means (17) that reside on the submodule (11A) and the remaining part (11B) of the first module (11) that are interconnected by means of a further optical connector (18).

7. Device according to one of the above-mentioned claims, **characterized in that** the second module (12) is a service module (RGU).

8. Device according to claim 7, **characterized in that** the device does not contain more than one service module (RGU).

9. Device according to one of the above-mentioned claims, **characterized in that** the attachment means (7) comprise a detachable snap connection.

10. Device according to one of the above-mentioned claims, **characterized in that** a part of the attachment means (7) is also a part of the connector parts (8) for conducting through the signals coming from the transceiver from the first to the second module.

11. Device according to one of the above-mentioned claims, **characterized in that** the attachment means (7) comprise a lockable fastening and that the second module (12) has been provided with a control (23) on the outside for locking or releasing the lockable fastening and that the device is preferably provided with means for detecting the release of the lockable fastening and of controls that interrupt or recover a signal offered on a signal carrier after having detected the release or locking.

12. Device according to one of the above-mentioned claims, **characterized in that** feedback information coming from the second module (12) is led on to visualisation means (22) placed on a visible side of the first module (11).

13. Broadband network system using a device (10) according to one of the above-mentioned claims, in which the broadband network system comprises an optical communication system.

14. Method of making a device (10) for use at the location of a customer of a broadband network system provided with one or more user ports (1) for connecting appliances (2) of the customer to optical fibres (3) and in which signals received from an incoming optical fibre (3) are converted using a transceiver (4) into electrical signals that, after additional processing to make them suitable for the appliances (2), are offered to the user ports (1) for supply to the appliances (2) concerned, the device (10) being made out of a first module including the transceiver (4) that on one side has been connected to the incoming optical fibre (3) and a second module (12) that on the user-accessible outside (5) is provided with the user ports (1) within which means (6) for carrying out the additional processing reside, **characterized in that** the second module (12) is detachably attached to the first module (11) using co-operating attachment means (7) made on the modules in which two opposite sides of the modules (11,12) are provided with mutually corresponding connector parts (8) forming a connection by means of which the signals coming from the transceiver (4) are during use led from the first module (11) to the second module (12).

## Patentansprüche

1. Eine Einrichtung (10) zur Verwendung am Standort eines Kunden eines Breitbandnetzwerksystems, das mit einer oder mehreren Benutzerschnittstellen (1) zum Verbinden von Geräten (2) des Kunden mit Lichtwellenleitern (3) versehen ist, und in denen Signale, die von einem eingehenden Lichtwellenleiter (3) empfangen werden, unter Verwendung eines Sende-Empfangs-Geräts (4) in elektrische Signale umgewandelt werden, die nach einer zusätzlichen Bearbeitung, um sie für die Geräte (2) passend zu machen, den Benutzerschnittstellen (1) angeboten werden, um sie den betroffenen Geräten (2) zur Verfügung zu stellen, wobei die Einrichtung (10) ein erstes Modul (11) umfasst, welches das Sende-Empfangs-Gerät (4) umfasst, das auf einer Seite mit dem eingehenden Lichtwellenleiter (3) verbunden worden ist und, und ein zweites Modul (12) umfassend, mit den Benutzerschnittstellen an der vom Benutzer zugänglichen Außenseite (5), worin sich Mittel (6) zum Durchführen der zusätzlichen Bearbeitung befinden, **dadurch gekennzeichnet, dass** das zweite Modul (12) unter Verwendung von zusammenwirkenden Befestigungsmitteln (7) abnehmbar am ersten Modul (11) befestigt worden ist, die sich auf den Modulen (11, 12) befinden, wobei zwei gegenüberliegende Seiten der Module (11, 12) mit gegenseitig entsprechenden Steckverbinderteilen (8) versehen sind, die gemeinsam eine Verbindung bilden, anhand derer die aus dem Sende-Empfangs-Gerät (4) kommenden Signale während der Nutzung vom ersten Modul (11) in das zweite Modul (12) geleitet werden.

2. Eine Einrichtung (10) nach Anspruch 1, **dadurch gekennzeichnet, dass** das erste Modul einen optischen Wandler (13) enthält, der die aus dem Sende-Empfangs-Gerät kommenden elektrischen Signale in optische Signale umwandelt, die danach optisch zwischen Modulen (11, 12) zu einem weiteren Wandler (14) übertragen werden, der die optischen Signale wieder in elektrische Signale umwandelt, und wobei die gegenseitig entsprechenden Steckverbinderteile (8) einen optischen Steckverbinder (50) bilden.

3. Eine Einrichtung nach den Ansprüchen 1 und 2, **dadurch gekennzeichnet, dass** die gegenseitig entsprechenden Steckverbinderteile (8) eine elektrische Verbindung bilden, bei der sich vorzugsweise ein Paar (8A) an Steckverbinderteilen (8) zum Übertragen von Leistung zwischen den Modulen (11, 12) eignet.

4. Eine Einrichtung nach den Ansprüchen 1, 2 oder 3, **dadurch gekennzeichnet, dass** das erste Modul Mittel (15) zum Umwandeln der elektrischen Signale in Übereinstimmung mit Protokollen oder Standards enthält.

5. Eine Einrichtung nach einem der zuvor genannten Ansprüche, **dadurch gekennzeichnet, dass** das erste Modul auch eine Umschaltvorrichtung (16) zum Abgreifen elektrischer Signale zu einem Steckverbinder (20) aufweist, wobei die Umschaltvorrichtung (16) vorzugsweise durch einen Prozessor (21) gesteuert wird.

6. Eine Einrichtung nach einem der zuvor genannten Ansprüche, **dadurch gekennzeichnet, dass** das erste Modul (11) ein Submodul (11A) aufweist, das ein optisches Abschlussmodul bildet und der verbleibende Teil (11B) des ersten Moduls (11) unter Verwendung weiterer Befestigungsmittel (17) abnehmbar am Submodul (11A) befestigt worden ist, die sich am Submodul (11A) und dem verbleibenden Teil (11B) des ersten Moduls (11) befinden, die durch einen weiteren optischen Steckverbinder (18) miteinander verbunden sind.

7. Eine Einrichtung nach einem der zuvor genannten Ansprüche, **dadurch gekennzeichnet, dass** das zweite Modul (12) ein Servicemodul (RGU) ist.

8. Eine Einrichtung nach Anspruch 7, **dadurch gekennzeichnet, dass** die Einrichtung nicht mehr als ein Servicemodul (RGU) enthält.

9. Eine Einrichtung nach einem der zuvor genannten Ansprüche, **dadurch gekennzeichnet, dass** die Befestigungsmittel (7) eine abnehmbare Schnappverbindung umfassen.

10. Eine Einrichtung nach einem der zuvor genannten Ansprüche, **dadurch gekennzeichnet, dass** ein Teil der Befestigungsmittel (7) auch ein Teil der Steckverbinderteile (8) zur Durchleitung der vom Sende-Empfangs-Gerät kommenden Signale vom ersten zum zweiten Modul ist.

11. Eine Einrichtung nach einem der zuvor genannten Ansprüche, **dadurch gekennzeichnet, dass** die Befestigungsmittel (7) eine verriegelbare Befestigung umfassen und dass das zweite Modul (12) mit einer Steuerung (23) an der Außenseite zum Verriegeln oder Freigeben der verriegelbaren Befestigung versehen worden ist, und dass die Einrichtung vorzugsweise mit Mitteln zum Erfassen der Freigabe der verriegelbaren Befestigung und von Steuerungen versehen ist, die ein Signal unterbrechen oder wiederherstellen, das auf einem Signalträger angeboten wird, nachdem die Freigabe oder die Verriegelung erfasst worden ist.

12. Eine Einrichtung nach einem der zuvor genannten Ansprüche, **dadurch gekennzeichnet, dass** Feedback-Information aus dem zweiten Modul (12) auf Visualisierungsmittel (22) geleitet wird, die auf einer sichtbaren Seite des ersten Moduls (11) angebracht sind.

13. Ein Breitbandnetzwerksystem, eine Einrichtung (10) nach einem der zuvor genannten Ansprüche nutzend, wobei das Breitbandnetzwerksystem ein optisches Kommunikationssystem umfasst.

14. Ein Verfahren zur Herstellung einer Einrichtung (10) zur Verwendung am Standort eines Kunden eines Breitbandnetzwerksystems, das mit einem oder mehreren Benutzerschnittstellen (1) zum Verbinden von Geräten (2) des Kunden mit Lichtwellenleitern (3) versehen ist, und in denen Signale, die von einem eingehenden Lichtwellenleiter (3) empfangen werden, unter Verwendung eines Sende-Empfangs-Geräts (4) in elektrische Signale umgewandelt werden, die nach einer zusätzlichen Bearbeitung, um sie für die Geräte (2) passend zu machen, den Benutzerschnittstellen (1) angeboten werden, um sie den betroffenen Geräten (2) zur Verfügung zu stellen, wobei die Einrichtung (10) aus einem ersten Modul ausgefertigt sind, welches das Sende-Empfangs-Gerät (4) enthält, das auf einer Seite mit dem eingehenden Lichtwellenleiter (3) verbunden worden ist und, und aus einem zweiten Modul (12), das an der vom Benutzer zugänglichen Außenseite (5) mit den Benutzerschnittstellen (1) versehen ist, worin sich Mittel (6) zum Durchführen der zusätzlichen Bearbeitung befinden, **dadurch gekennzeichnet, dass** das zweite Modul (12) unter Verwendung von zusammenwirkenden Befestigungsmitteln (7) abnehmbar am ersten Modul (11) befestigt ist, die auf den Modulen vorhanden sind, wobei zwei gegenüberliegende Seiten der Module (11, 12) mit gegenseitig entsprechenden Steckverbinderteilen (8) versehen sind, die eine Verbindung bilden, anhand derer die aus dem Sende-Empfangs-Gerät (4) kommenden Signale während der Nutzung vom ersten Modul (11) in das zweite Modul (12) geleitet werden.

## Revendications

1. Un dispositif (10) destiné à être utilisé à l'emplacement d'un client d'un système de réseau à large bande pourvu d'un ou de plusieurs ports utilisateur (1) pour connecter des appareils (2) du client à des fibres optiques (3) et dans lequel des signaux reçus en provenance d'une fibre optique entrante (3) sont convertis à l'aide d'un émetteur-récepteur (4) en signaux électriques qui, après traitement supplémentaire pour les rendre adaptés pour les appareils (2), sont offerts aux ports utilisateur (1) pour une alimentation des appareils (2) concernés, le dispositif (10) comprenant un premier module (11) qui comprend l'émetteur-récepteur (4) qui d'un côté a été connecté à la fibre optique entrante (3) et qui comprend un second module (12) avec les ports utilisateur sur l'extérieur accessible à l'utilisateur (5), au sein duquel des moyens (6) de réalisation du traitement supplémentaire résident, **caractérisé en ce que** le second module (12) a été fixé de façon amovible au premier module (11) à l'aide de moyens de fixation coopératifs (7) présents au niveau des modules (11, 12) dans lesquels deux côtés opposés des modules (11, 12) sont pourvus de parties de connecteurs (8) mutuellement correspondantes formant ensemble une connexion au moyen de laquelle les signaux provenant de l'émetteur-récepteur (4) sont en utilisation menés du premier module (11) au second module (12).

2. Le dispositif (10) selon la revendication 1, **caractérisé en ce que** le premier module comporte un convertisseur optique (13) convertissant les signaux électriques provenant de l'émetteur-récepteur en signaux optiques qui sont alors transférés optiquement entre les modules (11, 12) jusqu'à un convertisseur supplémentaire (14) convertissant les signaux optiques à nouveau en signaux électriques et dans lesquels les parties de connecteur (8) mutuellement correspondantes forment un connecteur optique (50).

3. Le dispositif selon les revendications 1 et 2, **caractérisé en ce que** les parties de connecteur mutuellement correspondantes (8) forment une connexion électrique dans laquelle de préférence une paire (8a) des parties de connecteur (8) est adaptée pour transférer de la puissance entre les modules (11, 12).

4. Le dispositif selon les revendications 1, 2 ou 3, **caractérisé en ce que** le premier module comporte des moyens (15) de conversion des signaux électriques conformément à des protocoles ou des normes.

5. Le dispositif selon l'une des revendications mentionnées ci-dessus, **caractérisé en ce que** le premier module a également une fourniture de commutation (16) pour dériver des signaux électriques à un connecteur (20) dans lequel la fourniture de commutation (16) est de préférence commandée par un processeur (21).

6. Le dispositif selon l'une des revendications mentionnées ci-dessus, **caractérisé en ce que** le premier module (11) a un sous-module (11A) formant un module de terminaison optique et la partie restante (11B) du premier module (11) a été fixée de façon amovible au sous-module (11A) à l'aide de moyens de fixation (17) supplémentaires qui résident sur le sous-module (11A) et la partie restante (11B) du premier module (11) qui sont reliés au moyen d'un connecteur optique supplémentaire (18).

7. Le dispositif selon l'une des revendications mentionnées ci-dessus, **caractérisé en ce que** le second module (12) est un module de service (RGU).

8. Le dispositif selon la revendication 7, **caractérisé en ce que** le dispositif ne contient pas plus d'un module de service (RGU).

9. Le dispositif selon l'une des revendications mentionnées ci-dessus, **caractérisé en ce que** les moyens de fixation (7) comprennent une connexion à encliquetage amovible.

10. Le dispositif selon l'une des revendications mentionnées ci-dessus, **caractérisé en ce qu'**une partie des moyens de fixation (7) fait également partie des parties de connecteur (8) pour conduire les signaux provenant de l'émetteur-récepteur du premier au second module.

11. Le dispositif selon l'une des revendications mentionnées ci-dessus, **caractérisé en ce que** les moyens de fixation (7) comprennent une fixation verrouillable et **en ce que** le second module (12) a été pourvu d'une commande (23) sur l'extérieur pour verrouiller ou libérer la fixation verrouillable et **en ce que** le dispositif est de préférence pourvu de moyens de détection de la libération de la fixation verrouillable et de commandes qui interrompent ou récupèrent un signal offert sur une porteuse de signal après avoir détecté la libération ou le verrouillage.

12. Le dispositif selon l'une des revendications mentionnées ci-dessus, **caractérisé en ce que** des informations de rétroaction provenant du second module (12) sont menées sur des moyens de visualisation (22) placés sur un côté visible du premier module (11).

13. Un système de réseau à large bande utilisant un dispositif (10) selon l'une des revendications mentionnées ci-dessus, dans lequel le système de réseau à large bande comprend un système de communication optique.

14. Un procédé de fabrication d'un dispositif (10) destiné à être utilisé à l'emplacement d'un client d'un système de réseau à large bande pourvu d'un ou de plusieurs ports utilisateur (1) pour connecter des appareils (2) du client à des fibres optiques (3) et dans lequel des signaux reçus en provenance d'une fibre optique entrante (3) sont convertis à l'aide d'un émetteur-récepteur (4) en signaux électriques qui, après traitement supplémentaire pour les rendre adaptés aux appareils (2), sont offerts aux ports utilisateur (1) pour une alimentation des appareils (2) concernés, le dispositif (10) étant constitué d'un premier module comportant l'émetteur-récepteur (4) qui d'un côté a été connecté à la fibre optique entrante (3) et d'un second module (12) qui sur l'extérieur accessible à l'utilisateur (5) est pourvu des ports utilisateur (1) au sein duquel des moyens (6) de réalisation du traitement supplémentaire résident, **caractérisé en ce que** le second module (12) est fixé de façon amovible au premier module (11) à l'aide de moyens de fixation coopératifs (7) réalisés sur les modules dans lesquels deux côtés opposés des modules (11, 12) sont pourvus de parties de connecteur (8) mutuellement correspondantes formant une connexion au moyen de laquelle les signaux provenant de l'émetteur-récepteur (4) sont en utilisation menés du premier module (11) au second module (12).
